(19) Europäisches Patentamt / European Patent Office / Office européen des brevets

(11) **EP 3 945 694 B1**

(12) **EUROPEAN PATENT SPECIFICATION**

(45) Date of publication and mention
of the grant of the patent:
**30.08.2023 Bulletin 2023/35**

(21) Application number: **21179692.5**

(22) Date of filing: **16.06.2021**

(51) International Patent Classification (IPC):
**H04L 9/32** *(2006.01)* **G06F 16/22** *(2019.01)*
**H04L 9/00** *(2022.01)* **H04L 67/1097** *(2022.01)*

(52) Cooperative Patent Classification (CPC):
**H04L 9/3236; H04L 9/50; H04L 67/1097**

(54) **BLOCK DATA ACCESS METHOD, BLOCK DATA STORAGE METHOD, AND APPARATUSES THEREOF**

BLOCKDATENZUGRIFFSVERFAHREN, BLOCKDATENSPEICHERVERFAHREN UND VORRICHTUNGEN DAFÜR

PROCÉDÉ D'ACCÈS DE DONNÉES DE BLOC, PROCÉDÉ DE STOCKAGE DE DONNÉES DE BLOC ET APPAREILS CORRESPONDANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2020 CN 202010759163**

(43) Date of publication of application:
**02.02.2022 Bulletin 2022/05**

(73) Proprietor: **Alipay (Hangzhou) Information
Technology Co., Ltd.
Hangzhou, Zhejiang 310000 (CN)**

(72) Inventors:
• **ZHU, Zhihui
Hangzhou, Zhejiang, 310000 (CN)**
• **YU, Shan
Hangzhou, Zhejiang, 310000 (CN)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 110 535 687**

• **XU MENGTIAN ET AL: "On Cloud Storage
Optimization of Blockchain With a
Clustering-Based Genetic Algorithm", IEEE
INTERNET OF THINGS JOURNAL, IEEE, USA, vol.
7, no. 9, 7 May 2020 (2020-05-07), pages
8547-8558, XP011809215, DOI:
10.1109/JIOT.2020.2993030 [retrieved on
2020-09-14]**

**Description**

**TECHNICAL FIELD**

One or more implementations of the present specification relate to the field of blockchain technologies, and in particular, to a block data access method, a block data storage method, and apparatuses thereof.

**BACKGROUND**

Blockchain technology (also known as distributed ledger technology) is a decentralized distributed database technology with various features such as being decentralized, open and transparent, tamper-resistant, and trustworthy, and is applicable to many application scenarios with high demands for data reliability.
CN 110 535 687 A relates to a collaborative caching method based on a lightweight blockchain in an Internet of Vehicles environment and thus belongs to the field of Internet of Vehicles.

**SUMMARY**

The invention is defined in the independent claims. Advantageous modifications are set forth in the dependent claims.

In view of this, one or more implementations of the present specification provide a block data access method, a block data storage method, and apparatuses thereof.

Technical solutions provided in one or more implementations of the present specification are as follows:
According to a first aspect of one or more implementations of the present specification, a block data access method is provided and is applied to a blockchain node, a storage space corresponding to the blockchain node including a local storage space and an external storage space, the external storage space including at least one of a cloud storage server or a distributed storage device, the local storage space being used to store one or more blocks with an access value greater than a value threshold, the external storage space being used to store one or more blocks not stored in the local storage space or to store a complete set of all blocks, and an access value of any block being positively correlated with at least one of: a service value of a transaction included in the any block, a block height of the any block, or an access value of an associated block of the any block; the method including: determining, according to a block index table corresponding to the complete set of all blocks, the local storage space or the external storage space as a target storage space including a target block; or determining whether relevant information of the target block is recorded in a block index table of the one or more blocks stored in the local storage space; if yes, determining the local storage space as the target storage space; otherwise, determining the external storage space as the target storage space; and accessing, from the target storage space, target data included in the target block.

According to a second aspect of one or more implementations of the present specification, a block data storage method is provided, applied to a blockchain node and including: obtaining a block generated by the blockchain node; storing the block to at least one of a local storage space or an external storage space, the local storage space being used to store one or more blocks with an access value greater than a value threshold, the external storage space being used to store one or more blocks not stored in the local storage space or to store a complete set of all blocks, the external storage space including at least one of a cloud storage server or a distributed storage device, and an access value of any block being positively correlated with at least one of a service value of a transaction included in the any block, a block height of the any block, or an access value of an associated block of the any block; and generating a block index table corresponding to the complete set of all blocks according to storage locations of all blocks; or generating, according to the block stored in the local storage space, a block index table corresponding to the block stored in the local storage space.

According to a third aspect of one or more implementations of the present specification, a block data access apparatus is provided and applied to a blockchain node, a storage space corresponding to the blockchain node including a local storage space and an external storage space, the external storage space including at least one of a cloud storage server or a distributed storage device, the local storage space being used to store one or more blocks with an access value greater than a value threshold, the external storage space being used to store one or more blocks not stored in the local storage space or store a complete set of all blocks, and an access value of any block being positively correlated with at least one of a service value of a transaction included in the any block, a block height of the any block, or an access value of an associated block of the any block; the apparatus including: a determining unit, configured to determine, according to a block index table corresponding to the complete set of all blocks, the local storage space or the external storage space as a target storage space including a target block; or determine whether relevant information of the target block is recorded in a block index table of the one or more blocks stored in the local storage space; if yes, determine the local storage space as the target storage space; otherwise, determine the external storage space as the target storage space; and an access unit, configured to access, from the target storage space, target data included in the target block.

According to a fourth aspect of one or more implementations of the present specification, a block data storage apparatus is provided, applied to a blockchain node and including: an acquisition unit, configured to obtain a block generated by the blockchain node; a storage unit, configured to store the block to at least one of a local storage space or an external storage space, the local storage space being used to store one or more blocks with an access value greater than a value threshold, the external storage space being used to store one or more blocks not stored in the local storage space or to store a complete set of all blocks, the external storage space including at least one of a cloud storage server or a distributed storage device, and an access value of any block being positively correlated with at least one of: a service value of a transaction included in the any block, a block height of the any block, or an access value of an associated block of the any block; and a generation unit, configured to generate a block index table corresponding to the complete set of all blocks according to storage locations of all blocks; or generate, according to the block stored in the local storage space, a block index table corresponding to the block stored in the local storage space.

According to a fifth aspect of one or more implementations of the present specification, an electronic device is provided, including: a processor; and a memory configured to store an executable instruction of the processor; the processor implementing the method according to the first aspect or the second aspect by running the executable instruction.

According to a sixth aspect of one or more implementations of the present specification, a computer readable storage medium storing a computer instruction is provided, where when being executed by a processor, the instruction implements the steps of the method according to the first aspect or the second aspect.

## BRIEF DESCRIPTION OF DRAWINGS

FIG. 1 is a flowchart illustrating a block data storage method according to an example implementation of the present specification.

FIG. 2 is a flowchart illustrating a block data access method according to an example implementation of the present specification.

FIG. 3 is a flowchart illustrating another block data storage method according to an example implementation of the present specification.

FIG. 4 is a flowchart illustrating a block storage location adjustment method according to an example implementation of the present specification.

FIG. 5 is a flowchart illustrating another block data access method according to an example implementation of the present specification.

FIG. 6 is a schematic structural diagram illustrating an electronic device according to an example implementation of the present specification.

FIG. 7 is a block diagram illustrating a block data access apparatus according to an example implementation of the present specification.

FIG. 8 is a schematic structural diagram illustrating another electronic device according to an example implementation of the present specification.

FIG. 9 is a block diagram illustrating a block data storage apparatus according to an example implementation of the present specification.

## DESCRIPTION OF IMPLEMENTATIONS

Example implementations are described in detail herein, and examples of the example implementations are presented in the accompanying drawings. When the following descriptions relate to the accompanying drawings, unless specified otherwise, same numbers in different accompanying drawings represent same or similar elements. Implementations described in the following example implementations do not represent all implementations consistent with one or more implementations of the present specification. On the contrary, the implementations are merely examples of apparatuses and methods that are described in the appended claims in details and consistent with some aspects of one or more implementations of the present specification.

It should be noted that, in other implementations, steps of a corresponding method are not necessarily performed according to a sequence shown and described in the present specification. In some other implementations, the method can include more or fewer steps than those described in the present specification. In addition, individual steps described in the present specification can be broken down into multiple steps in other implementations for description. However, the multiple steps described in the present specification can also be combined into a single step for description in other implementations.

Blockchain technology (also known as distributed ledger technology) is a decentralized distributed database technology with various features such as being decentralized, open and transparent, tamper-resistant, and trustworthy, and is applicable to many application scenarios with high demands for data reliability.

However, along with the quality features of blockchain technology such as decentralization and tamper-resistance, storing data through blockchain technology also has its drawbacks. For example, because all blockchain nodes need to store a complete distributed ledger, this makes the blockchain technology achieve data tamper-resistance while causing a case where data only increases without decreasing. As the quantity of blocks increases, a local storage space of a blockchain node will be unable to carry a newly generated block sooner or later. Therefore, the local storage space needs to be continuously expanded, which results in continuous hardware costs and maintenance costs.

For the above reasons, the present specification improves a data storage method in an existing blockchain node, so the blockchain node can always carry a newly generated block without expanding a local storage space, and can quickly read required data when a user needs to access block data.

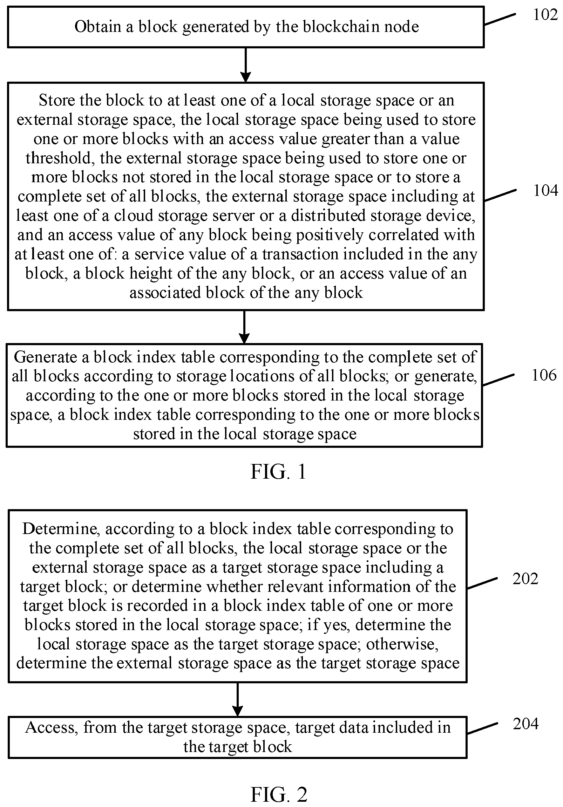

FIG. 1 is a block data storage method according to an example implementation of the present specification, and the method is applied to a blockchain node. As shown in FIG. 1, the method can include the following steps:

Step 102: Obtain a block generated by the blockchain node.

In the present specification, the blockchain node can be deployed on any type of electronic device, such as a mobile phone, a personal computer (PC), a tablet computer, a laptop computer, a personal digital assistant (PDA), a wearable device (such as smart glasses or a smartwatch), or a server. This is not limited in the present specification.

The blockchain node in the present specification can be a node included in any type of blockchain network. For example, the blockchain network can be a public blockchain, a consortium blockchain, or a private blockchain. This is not limited in the present specification.

Step 104: Store the block to at least one of a local storage space or an external storage space, the local storage space being used to store one or more blocks with an access value greater than a value threshold, the external storage space being used to store one or more blocks not stored in the local storage space or to store a complete set of all the blocks, the external storage space including at least one of a cloud storage server or a distributed storage device, and an access value of any block being positively correlated with at least one of: a service value of a transaction included in the any block, a block height of the any block, or an access value of an associated block of the any block.

In a related art, all blocks generated by a blockchain node are usually stored in the local storage space. However, the local storage space is limited. To avoid saturation of the local storage space, the local storage space needs to be continuously expanded, resulting in continuous hardware costs and maintenance costs.

In the present specification, in addition to being stored in the local storage space, blocks generated by the blockchain node are stored in the external storage space. This makes it unnecessary to expand the local storage space even if the quantity of blocks stored in the blockchain node only increases without decreasing, and it is only necessary to store the blocks in the external storage space. In addition, the present specification stores a block according to an access value of the block. The local storage space is used to store a block with a higher access value, and the external storage space can store a block with a lower access value or to store a complete set of all blocks. When a user needs to access block data, the user can directly obtain the required block data from the local storage space with a larger probability, thereby improving efficiency of accessing the block data.

In the present specification, the value threshold can be predetermined, so as to determine, by comparing an access value of a block with the value threshold, whether to store the block in the local storage space or in the external storage space. The value threshold can be determined by a person skilled in the art according to actual conditions, which is not limited in the present specification.

In the present specification, provided that the sum of blocks stored in the local storage space and blocks stored in the external storage space can cover the complete set of all blocks, a specific storage method can be determined according to an actual situation.

In an implementation, the local storage space and the external storage space can separately store a portion of the complete set of all blocks, and blocks stored by them are not duplicate to each other. For example, blocks with an access value higher than the value threshold are stored in the local storage space, and blocks with an access value lower than the value threshold are stored in the external storage space. Because a block stored as such does not have a backup in a blockchain node to which the block belongs, a storage space is saved to a maximum extent, and a storage space waste is avoided.

In another implementation, the local storage space can store only a portion of the complete set of all blocks, while the external storage space stores the complete set of all blocks. For example, only blocks with an access value higher than the value threshold are stored in the local storage space, and the complete set of all blocks are stored in the external storage space. As such, the complete set of all blocks are stored in the external storage space, so a block stored in the local storage space has a backup block in the external storage space. It should be understood that, because a block with a higher access value is stored in the local storage space, a higher access value generally means more important. In other words, a backup block of a block with a higher access value is stored in the external storage space, which is equivalent to backing up a more important block. It can be understood that, by using the method in this implementation, security of a more important block can be ensured.

As the quantity of stored blocks increases, it is possible that the total data volume of blocks with an access value higher than the value threshold is greater than a capacity of the local storage space. In this case, only blocks with a higher access value in blocks with an access value higher than the value threshold can be stored in the local storage space. For example, assume that the capacity of the local storage space is 100 GB, and the total data volume of blocks with an access value higher than the value threshold is 150 GB, blocks with a higher access value and whose total data volume is less than or equal to 100 GB can be determined in the 150 GB, and the determined blocks are stored in the local storage space. It should be understood that the data volume of the determined blocks needs to be less than or equal to 100 GB because data is stored in a block form, and the data in the block cannot be separately stored. In practice, as many blocks as possible are usually stored in the local storage space. That is, in this example, 100 GB of the local storage space is filled with as many as possible blocks with a higher access value, so as to maximize usage of the local storage space.

Step 106: Generate a block index table corresponding to the complete set of all blocks according to storage locations of all blocks; or generate, according to the block stored in the local storage space, a block index table corresponding to the block stored in the local storage space.

In the present specification, the block index table can be generated based on the storage locations of all the blocks. For example, each block can be recorded with a block index indicating that the block is stored in the local storage space or the external storage space, so as to facilitate searching for a storage location of each block. A specific form of the block index table and content of the record can be determined according to an actual situation.

In an implementation, the block index table can correspond to the complete set of all blocks. Specifically, the block index table can be generated according to the storage locations of all the blocks. On this basis, when a user needs to access target data stored in a target block, the user can find, according to the block index table, whether the target block is stored in the local storage space or stored in the external storage space. It should be understood that in this case, if the target block is stored in both the local storage space and the external storage space, the target block is preferably accessed from the local storage space. A reason is that in an actual application, a block stored in the external storage space needs to be accessed by preferentially reading the block from the external storage space to the local storage space, and then the block read to the local storage space is accessed. Access efficiency is lower.

In another implementation, the block index table can correspond only to blocks stored in the local storage space. Specifically, the block index table can record only the blocks stored in the local storage space. On this basis, when a user needs to access target data stored in a target block, it can be determined whether the block index table records index information of the target block. If exists, it is proved that the target block is stored in the local storage space; otherwise, it is proved that the target block is stored in the external storage space. Correspondingly, if both the local storage space and the external storage space store only a portion of the complete set of all blocks, and the blocks stored in both the local storage space and the external storage space do not duplicate each other, the block index table can also correspond to only blocks stored in the external storage space. In this case, if a target block is found in the block index table, it is proved that the target block is stored in the external storage space; otherwise, it is proved that the target block is stored in the local storage space.

In the present specification, the block index table can further record block data stored in each block, so when a block data access request for target data is received, a target block in which the target data is stored is determined according to the block index table, and then a storage location of the target block is determined.

In the blockchain node, block data is usually stored in a transaction form. On this basis, an access value of any block in the present specification is positively correlated with a service value of a transaction included in the block. It should be understood that, if a block includes multiple transactions, the service value of the included transaction in the above refers to the sum of service values of the multiple transactions.

In the present specification, a service value of each transaction usually needs to be measured from multiple dimensions. For example, the service value of each transaction can be correlated with at least one of: an asset type involved, an asset amount involved, a transaction type, or importance of a user involved. Certainly, the example is merely for illustration. How to measure the service value of each transaction can be determined by a person skilled in the art according to an actual need, which is not limited in the present specification.

The access value of the block can be correlated with other factors in addition to the service value of the transaction included in the block. For example, the access value of the block can also be associated with at least one of its block height or access popularity.

The block height can be used to measure the distance from a block to the foundation block. Because blocks are sequentially chained according to a generation time sequence, the block height can also be used to measure duration between a generation moment of the block and the current moment. A higher height of a block means that the block has a longer distance from the foundation block, and its generation moment is closer to the current moment. In this field, a generation moment of a block being closer to the current moment indicates higher time validity of data stored in the block, which indicates a higher access value of the block. In other words, the access value of the block is positively correlated with the block height.

In this implementation, the access value of the block can further be positively correlated with the access popularity of the corresponding block, and the access popularity of the block is usually correlated with access frequency of the block.

In an implementation, the access popularity of the block is positively correlated with the access frequency of the block within a predetermined duration. In this implementation, the access popularity of the corresponding block can be directly represented by the access frequency. For example, the access frequency of the block in the predetermined duration can be counted, and the access frequency is used as the access popularity of the corresponding block.

In another implementation, the access popularity of the block can be obtained by predicting, by using a popularity analysis model, the access frequency of the corresponding block within the predetermined duration. Specifically, the predetermined duration can be predetermined, access frequency and access popularity of several stored blocks can be obtained, then the obtained access frequency is used as an input, and the obtained access popularity is used as an output, so as to obtain the popularity analysis model through training. On this basis, when there is a new block that needs to be stored, access frequency of the corresponding block within the predetermined duration can be preferably counted, and access popularity of the corresponding block is determined based on the counted access frequency and the popularity analysis model. Certainly, the above method of obtaining the access popularity is merely an example. Specifically, how to obtain the access popularity and factors correlated with the access popularity can be determined by a person skilled in the art according to an actual situation, which is not limited in the present specification.

It can be learned from the above content that the access value of the block can be highly correlated with the service value of the transaction included in the block, the access popularity, and the block height. In practice, the access value of any block can be obtained by using a deep learning method such as a neural network. For example, a person skilled in the art can determine, based on expertise and working experience, access popularity, a block height, an access value, and a service value of a transaction included in a sample block, and uses the access popularity, the block height, and the service value of the transaction included in the sample block as an input, and uses an access value of the sample block as an output, so as to train a value analysis model. On this basis, the value analysis model obtained through training can obtain the access value of the any block according to the service value of the transaction included in the any block, the block height, and the access popularity.

In a blockchain node, data included in different blocks can have similarities in some dimensions, so actual values of access values of these blocks are closer. However, because of differences in other dimensions, access values of these blocks determined by the blockchain node vary greatly. In other words, because different blocks are different in some dimensions, it is easy to misjudge access values of the blocks by the blockchain node. It can be understood that there can be an increased deviation between the access value determined based only on the relevant data of the block itself and the actual value. Therefore, the present specification also introduces the concept of an associated block to more accurately determine the access value of the block.

In the present specification, being mutually associated blocks refers to a certain similarity between blocks in some specific dimensions. For example, the similarity can be reflected in a similarity of included transactions. In practice, it can be determined, according to a similarity between transactions stored in two blocks, whether the two blocks are associated blocks. For example, if the two blocks are mutually associated blocks, at least one transaction included in one block and at least one transaction included in the other block are mutually associated transactions. Data stored on mutually associated transactions is similar. Specifically, they have at least one of the following associations: a same asset type is involved, a same or similar transaction type is involved, a same user is involved, or involved users are associated. Certainly, the example is merely for illustration. Specifically, how to determine the associated transaction and the associated block can be determined by a person skilled in the art according to an actual need, which is not limited in the present specification.

A method of determining an access value of the associated block is the same as the method of determining the access value of the block described above, and details are omitted herein for simplicity. The access value of any one of the above blocks is positively correlated with an access value of its associated block.

In addition to determining the access value of the associated block, a degree of impact of the associated block on any one of the above blocks needs to be determined. It should be understood that any one of the above blocks can have more than one associated block, and different associated blocks can have a same degree of or different degrees of impact on the any one of the above blocks. For example, when both a first block and a second block are associated blocks of a third block, impact of an access value of the first block on an access value of the third block can be the same as or different from that of an access value of the second block on the access value of the third block. Correspondingly, when a same block is used as an associated block of different blocks, an impact degree can also be the same or can be different. For example, when the first block serves as an associated block of a fourth block and a fifth block at the same time, a degree of impact of the access value of the first block on an access value of the fourth block can be the same as or different from that of the access value of the first block on an access value of the fifth block.

In practice, a degree of impact of an associated block on any one of the above blocks is generally correlated with block heights of the two blocks. It should be understood that a larger block height difference between the two blocks that are mutually associated with each other means a larger generation moment difference between the two blocks. However, the larger the generation moment difference is, the smaller the correlation between data of the two blocks is. For example, time validity of the two blocks is greatly different. Therefore, a degree of impact of the access value of the associated block on the access value of any one of the above blocks is negatively correlated with a block height difference between the associated block and the any block.

In the present specification, if a block stored in the external storage space needs to be accessed, the block needs to be preferentially transmitted to the local storage space, and then read from the local storage space. As such, the accessed block can be cached in the local storage space, so the user can read the block at any time.

In the present specification, a data read/write speed of the local storage space is higher than a data read/write speed of the external storage space. Based on this, blocks with higher access value can be quickly read and written, thereby improving a speed of accessing data by a user.

In the present specification, there are multiple types of external storage spaces. For example, the external storage space can be a cloud storage server and a distributed storage device. Certainly, this example is merely for illustration. In addition to the cloud storage server and the distributed storage device, any other type of network storage device can be used. Similarly, in the present specification, there are multiple types of local storage space, which, for example, can be a memory, a solid state drive (SSD), a hard disk drive (HDD), etc. A person skilled in the art can determine, according to an actual situation, a device or hardware used in the local storage space and the external storage space, which is not limited in the present specification.

It can be learned from the above technical solution that in the present specification, the external storage space is introduced, so when a total amount of data occupied by all blocks that need to be stored is greater than the capacity of the local storage space, blocks can be stored in the external storage space, which alleviates a technical problem in a related technology that the local storage space needs to be expanded due to saturation of the local storage space as the data in the blockchain increases without decreasing, thereby reducing hardware costs and maintenance costs.

Further, in the present specification, after blocks generated by the blockchain are obtained, a block with a higher access value is stored into the local storage space, and a block with a lower access value or the complete set of all blocks are stored into the external storage space. On this basis, when a user requests to access block data, there can be a larger probability of obtaining, from the local storage space, the block data that needs to be accessed, thereby improving efficiency of accessing the block data by the user.

Still further, in the present specification, the concept of the associated block is introduced, and when an access value of any block needs to be determined, an access value of the associated block is used as one of factors that affect the access value of the any block, thereby alleviating a problem that the determined access value does not correspond to an actual value because the access value is determined only by using the any block itself. That is, introducing the associated block improves accuracy of the block access value.

Corresponding to the block data storage method, the present specification further provides a block data access method, so as to access block data stored in the method.

It should be noted that, in the next implementation, most content has been described in the above implementation, for example, the method of obtaining an access value of a block and the method of storing a block. Therefore, repeated content is not described in the next implementation. For related content, refer to the description in the previous implementation.

FIG. 2 is a block data access method according to an example implementation of the present specification, and the method is applied to a blockchain node. As shown in FIG. 2, the method can include the following steps:

Step 202: Determine, according to a block index table corresponding to the complete set of all blocks, the local storage space or the external storage space as a target storage space including a target block; or determine whether relevant information of the target block is recorded in a block index table of the one or more blocks stored in the local storage space; if yes, determine the local storage space as the target storage space; otherwise, determine the external storage space as the target storage space.

As described above, the storage space corresponding to the blockchain node includes the local storage space and the external storage space. The local storage space is used to store one or more blocks with an access value greater than the value threshold, and the external storage space is used to store one or more blocks not stored in the local storage space or the complete set of all blocks.

As described above, the blockchain node can be deployed on any type of electronic device, for example, can be a common user terminal, such as a mobile phone, a PC, a tablet computer, a laptop computer, a palmtop computer, a wearable device, or a server.

As described above, the blockchain node in the present specification can be a node included in any type of blockchain network. For example, the blockchain network can be a public blockchain, a consortium blockchain, or a private blockchain. This is not limited in the present specification.

As described above, the value threshold can be predetermined, so as to determine, by comparing an access value of a block with the value threshold, whether to store the block in the local storage space or in the external storage space. In one case, the local storage space and the external storage space can separately store a portion of the complete set of all blocks, and the blocks stored in the two spaces are not the same as each other. In another case, the external storage space can store the complete set of all blocks.

As described above, the local storage space is used to preferentially store one or more blocks with a higher access value in blocks with an access value higher than the value threshold, if a total data amount of blocks with an access value higher than the value threshold is greater than a capacity of the local storage space.

Step 204: Access, from the target storage space, target data included in the target block.

As described above, after blocks are stored into at least one of the local storage space or the external storage space, the block index table can be generated based on storage locations of all blocks. The block index table can be corresponding to only blocks stored in the local storage space, or can be corresponding to the complete set of all blocks. When the block index table corresponds to the complete set of all blocks, the blockchain node can determine, according to the block index table corresponding to the complete set of all blocks, the target storage space in which the target block is stored. When the block index table corresponds to the blocks stored in the local storage space, the blockchain node can determine whether relevant information of the target block is recorded in the block index table of the one or more blocks stored in the local storage space; and if yes, the local storage space is determined as the target storage space; otherwise, the external storage space is determined as the target storage space.

As described above, the block index table can further record block data stored in each block, so when a block data access request for target data is received, a target block in which the target data is stored is determined according to the block index table, and then a storage location of the target block is determined.

As described above, an access value of any block is positively correlated with a service value of a transaction included in the block. The service value of each transaction can be correlated with at least one of: an asset type involved, an asset amount involved, a transaction type, or importance of a user involved.

As described above, the access value of the block can also be correlated with other factors. For example, the access value of the block is also positively correlated with at least one of its block height and access popularity. Access popularity of any block can be positively correlated with access frequency of the any block within predetermined duration. Or the access popularity of the any block is predicted by a popularity analysis model according to the access frequency of the any block within the predetermined duration.

As described above, in practice, the access value of any block can be obtained by using a deep learning method such as a neural network. For example, a person skilled in the art can determine, based on expertise and working experience, access popularity, a block height, an access value, and a service value of a transaction included in a sample block, and uses the access popularity, the block height, and the service value of the transaction included in the sample block as an input, and uses an access value of the sample block as an output, so as to train a value analysis model. On this basis, the value analysis model obtained through training can obtain the access value of the any block according to the service value of the transaction included in the any block, the block height, and the access popularity.

As described above, the present specification further introduces a concept of an associated block, so as to use an access value of the associated block as one of factors that affect an access value of a corresponding block, thereby improving accuracy of the determined block access value. Specifically, the access value of any block is positively correlated with the access value of the associated block. If two blocks are mutually associated blocks, at least one transaction included in one block and at least one transaction included in the other block are mutually associated transactions. At least one of the following associations exists between transactions that are mutually associated with each other: a same asset type is involved, a same or similar transaction type is involved, a same user is involved, or involved users are associated.

As described above, the access value of any block is positively correlated with an access value of its associated block. In addition, the access value of the any block is further correlated with an impact degree of the associated block on the any block. Specifically, the impact degree is negatively correlated with a block height difference between the two blocks.

As described above, if a block stored in the external storage space needs to be accessed, the block needs to be preferentially transmitted to the local storage space, and then read from the local storage space.

As described above, a data read/write speed of the local storage space is higher than a data read/write speed of the external storage space. Based on this, blocks with higher access value can be quickly read and written, thereby improving a speed of accessing target data by a user.

As described above, there are multiple types of external storage spaces in the present specification. For example, the external storage space can be a cloud storage server, a distributed storage device, etc. Similarly, the local storage space can also be a different storage medium, for example, can be a memory, a solid state drive (SSD), a hard disk drive (HDD), etc. The local storage space and the external storage space can be determined by a person skilled in the art according to an actual situation, which is not limited in the present specification.

It can be learned from the above technical solution that, in the present specification, the blocks generated by the blockchain node are separately stored in at least one of the local storage space or the external storage space according to their access values, where an access value of a block stored in the local storage space is higher than an access value of a block stored in the external storage space. In this storage method, a block with a higher access value can be accessed quickly, thereby improving efficiency of accessing block data.

Next, with reference to a specific implementation, the technical solutions in the present specification are described.

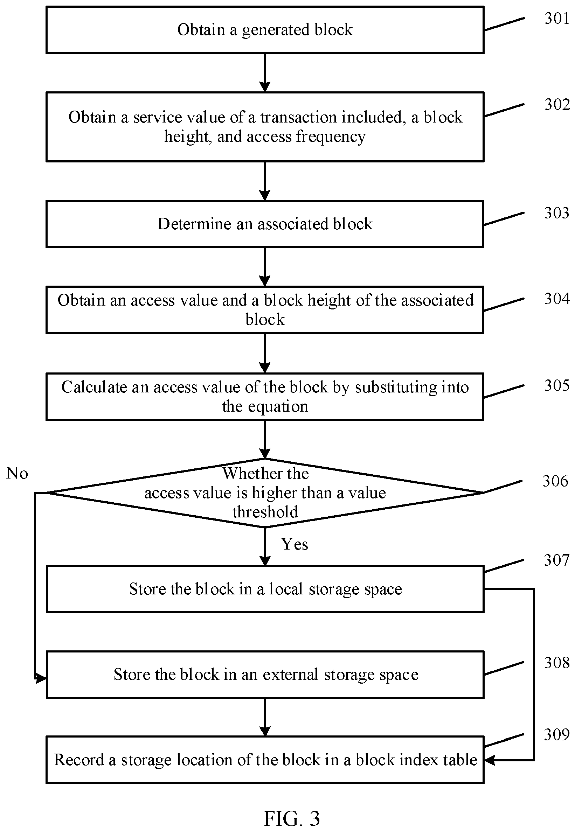

FIG. 3 is another block data storage method disclosed in an example implementation of the present specification. The method is applied to a blockchain node. As shown in FIG. 3, the method can include the following steps:

Step 301: Obtain a block generated by a blockchain node.

In this implementation, the blockchain node can generate a corresponding block when a to-be-stored transaction is received. In practice, after a block is generated, the block can be preferentially stored in a local storage space, so as to calculate an access value of the block.

It should be noted that, when the local storage space is saturated, the generated block can be first stored in an external storage space, so as to calculate an access value. Certainly, in practice, when the local storage space is not saturated, the block can be directly stored in the external storage space to calculate an access value, which is not limited in the present specification.

Step 302: Obtain service values of all transactions in the block, a block height of the block, and access frequency of the block.

In this implementation, an initial access value needs to be obtained based on related data of the generated block. The related data can include the block height of the block, the service values of all the transactions in the block, and the access frequency of the block.

The access frequency is used to represent the above access popularity. The access frequency of the block can be directly counted according to a predetermined duration after being first stored in the local storage space or the external storage space, or certainly can be obtained by using the above predetermined popularity analysis model.

For ease of understanding, for example, assume that a block A is generated in step 301 in this implementation. In this step, on one hand, service values of all transactions in the block A and a block height of the block A need to be obtained. On the other hand, after the block A is stored in the local storage space, the access frequency of the block A needs to be counted according to the predetermined duration.

Step 303: Determine an associated block of the block.

To obtain a more accurate access value, in addition to determining the initial access value by using related data of the generated block itself, it is necessary to determine an access value of the associated block of the block as one of the factors for calculating a final access value of the block.

In this implementation, relevant information of all the transactions included in the block can be preferentially obtained. For example, the relevant information can include a transaction type, a user involved, an asset type involved, and an asset amount involved. The relevant information of the transactions included in the block is compared with relevant information of transactions included in another block stored in the node, so a stored block with more similar relevant information is determined as an associated block of the block.

With reference to the above example, a user involved in the transaction included in the block A, an asset type and amount involved in the transaction, and a transaction type involved can be obtained, and further, the information is compared with relevant information of transactions included in stored blocks B, C, and D. Assume that an asset type and amount involved and a transaction type involved in a transaction included in the block B are more similar to those in the block A, the block B can be determined as an associated block of the block A.

Step 304: Obtain a block height and an access value of the associated block.

The determined associated block is used as one of the factors for calculating the final access value, and a degree of impact on the final access value is correlated with the access value and the block height. Therefore, the access value and the block height of the associated block further need to be obtained.

With reference to the above example, an access value of the block B and a block height of the block B can be obtained. In practical applications, a corresponding block information table can be established to query information correlated with a stored block.

Step 305: Substitute the service values of all the transactions in the obtained block, the block height of the block, and the access popularity of the block, and the block height and the access value of the associated block of the obtained block into a value calculation equation, so as to obtain an access value of the block.

After the service values of all the transactions in the block, the block height of the block, the access popularity of the block, and the block height and the access value of the associated block are determined, the access value of the block can be calculated. It should be noted that, for a device, what is done is that after the data correlated with the block and the data correlated with the associated block are obtained, the data is directly substituted into a pre-established model to obtain the access value of the block.

In this implementation, a predetermined model algorithm is disclosed to calculate the access value of the block.

The predetermined model algorithm is: $Block[Value]=a\sum_0^n f1(B[n], Block[height], P(x))+ b\sum_0^n f2(RBlock[value], RBlock[height], Block[height])$ where Block[Value] represents the block access value; a represents an adjustment coefficient of the initial access value, which can be determined by a person skilled in the art according to an actual situation, or dynamically adjusted by the device according to a first predetermined rule; f1(x) represents a function used to calculate the initial access value, and the function can be set by a person skilled in the art and rich in work experience, or can be determined based on a value analysis model obtained by training related data of a sample block; B[n] represents a service value of an nth transaction included in the block; Block[height] represents the block height; P(x) represents the access frequency of the block, and in this equation, the access frequency of the block is directly used as the access popularity of the block; b represents an adjustment parameter of the associated block for the initial access value, which can be determined by a person skilled in the art according to an actual situation, or dynamically adjusted by the device according to a second predetermined rule; f2(x) represents a function used to calculate the above adjustment amplitude, and the function can be set by a person skilled in the art and rich in work experience; RBlock[value] represents the access value of the associated block; and RBlock[height] represents the block height of the associated block.

It should be noted that in the above equation, the second part also includes a parameter Block[height], which is used to calculate the block height difference between the two blocks together with RBlock[height], so as to determine the degree of impact of the associated block on the block whose access value needs to be calculated.

Step 306: Determine whether the access value of the block is higher than a value threshold. If yes, perform step 307. If no, perform step 308.

In this implementation, the value threshold can be preferentially set, so as to serve as a basis for determining whether to store a block into the local storage space or the external storage space. For example, assume that the access value is represented by values 1 to 10, where a larger number indicates a higher access value of a corresponding block, the value threshold can be set to 5.

With reference to the above example, assume that the access value of the block A is 8 by using the above equation, it can be determined that the access value of the block A is higher than the value threshold. Therefore, the block can be stored in the local storage space. On the contrary, if the access value of the block A is 3 by using the above equation, it can be determined that the access value of the block A is lower than the value threshold. Therefore, the block A can be stored in the external storage space.

Step 307: Store the block in the local storage space.

Step 308: Store the block in the external storage space.

It should be understood that if a block is preferentially stored in the local storage space in step 301, a block with an access value higher than the value threshold does not need to be moved, while a block with an access value lower than the value threshold should be transferred to the external storage space.

Correspondingly, if a block is preferentially stored in the external storage space in step 301, a block with an access value higher than the value threshold needs to be transferred to the local storage space, while a block with an access value lower than the value threshold does not need to be moved.

It should be noted that the above storage method is applied to a case in which "both the local storage space and the external storage space store only a portion of the complete set of all blocks", that is, any block is stored in only the local storage space or the external storage space. In practice, the complete set of all blocks can be further stored in the external storage space. In this case, if a block is preferentially stored in the local storage space in step 301, a block with an access value higher than the value threshold needs to be copied to the external storage space, while a block with an access value lower than the value threshold needs to be transferred to the external storage space. If a block is preferentially stored in the external storage space in step 301, a block with an access value higher than the value threshold needs to be copied to the local storage space, while a block with an access value lower than the value threshold does not need to be operated.

Step 309: Record a storage location of the block in a block index table.

In this implementation, after a block is stored in a corresponding storage space, a corresponding block index table can be generated, and the block index table records a storage location of each block, so as to search for a storage location of a block that needs to be accessed when an access request is received.

With reference to the above example, assume that the node further generates a block F, and finally stores the block F into the external storage space by using the above method, a block index table shown in Table 1 can be generated for the block A and the block F.

Table 1

| Block | Storage location |
|---|---|
| Block A | Local storage space |
| Block F | External storage space |

As shown in Table 1, the block index table records that a storage location of the block A is in the local storage space and a storage location of the block F is in the external storage space.

Certainly, it should be stated that, although a block stored in the local storage space and a block stored in the external storage space are recorded in the block index table in this implementation, in practice, only a block stored in the local storage space or a block stored in the external storage space can be recorded.

It can be learned from the above technical solution that, after blocks are generated by the blockchain node, the blockchain node can calculate access values of the blocks by using a predetermined value calculation equation, compare the access values with a predetermined value threshold, and then store one or more blocks with an access value higher than the value threshold into the local storage space, and store one or more blocks with an access value lower than the value threshold into the external storage space. On one hand, even if the local storage space is saturated, this does not affect a storage process of a block, avoiding a case in which a generated block cannot be stored as the storage space is statured because the block data only increases without decreasing in the related technology. On the other hand, in the present specification, a block with a higher access value is stored in the local storage space, so the block with a higher access value can be accessed quickly, thereby improving efficiency of accessing the block.

Further, in a process of calculating an access value, in the present specification, an initial access value of a block is calculated by using related data of the block. In addition, an access value of an associated block is used as one of calculation parameters of the access value of the corresponding block. By using this method, the calculated access value in the present specification is more accurate.

After the block generated by the blockchain node is stored based on the above implementation, the storage location of the block can be further adjusted according to a change of an access value of each block. Next, based on the previous implementation, how to adjust a storage location of a block based on a change of a block access value is described.

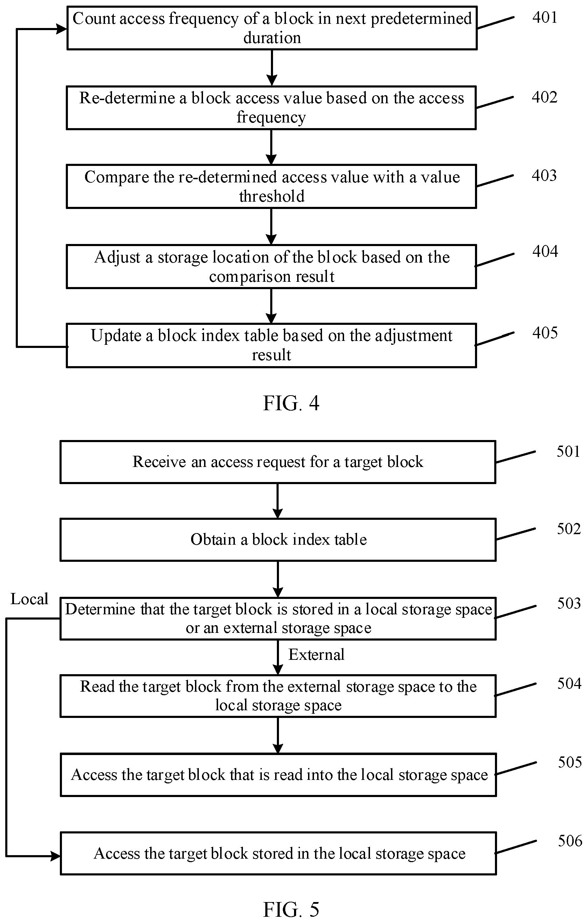

FIG. 4 is a block storage location adjustment method according to an example implementation of the present specification. As shown in FIG. 4, the method can include the following steps:

Step 401: Count access frequency of a block in next predetermined duration.

In the previous implementation, access frequency of a block is used as one of factors for evaluating an access value of the block, and the access frequency of the block varies with user access to data. Thus, although a transaction stored in the block and a block height do not change, the access value of the block changes with the access frequency. On this basis, the access value of the block needs to be repeatedly calculated based on a change of the access frequency, so as to adjust a storage location of the block.

It should be understood that the next predetermined duration in this step refers to a predetermined duration after the first predetermined duration in which the access frequency is counted in the previous implementation.

Step 402: Re-determine an access value of the block based on the counted access frequency.

In this implementation, the counted access frequency in step 401 can be substituted into the value calculation equation described in the above implementation, so as to re-determine the access value of the block.

It should be noted that in practical applications, the associated block of the block can also change. For example, after the block is stored in the blockchain node, a new block continues to be stored in the blockchain node, and a transaction included in the new block is more similar to a transaction included in the block. Therefore, the new block can be determined as an associated block of the block, and the access value of the block is determined based on the new associated block again.

Step 403: Compare the re-determined access value of the block with a value threshold.

With reference to the above example, assume that the redetermined access values of the block A and the block F are both 3, it can be determined that both the redetermined access value of the block A and the redetermined access value of the block F are lower than the value threshold.

Step 404: Adjust a storage location of the block based on the comparison result.

With reference to the above example, assume that storage locations of the blocks A and F after being stored in the above implementation are shown in Table 1. Therefore, because the re-determined access value of the block A is already lower than the value threshold, the block A should be transferred from the local storage space to the external storage space. Because the re-determined access value of the block F is also lower than the value threshold, but the block F is originally stored in external storage space, a storage location of the block F does not need to be adjusted.

It should be noted that if the complete set of all blocks are stored in the external storage space, only the block A stored in the local storage space needs to be deleted, and the block F still does not need to be operated.

Step 405: Update a block index table based on the adjustment result, and perform step 401.

In this implementation, after the storage location of the block is adjusted, the block index table should be correspondingly updated, so as to avoid a case in which a block cannot be found because the block index table is not updated in time.

With reference to the above example, the updated block index table can be shown in Table 2.

Table 2

| Block | Storage location |
|-------|------------------|
| Block A | External storage space |
| Block F | External storage space |

It should be understood that a process of adjusting a block storage location and updating a block index table is always ongoing. Therefore, after the block index table is updated, step 401 can be performed to adjust a next block location and update the index table again.

After the generated block is stored based on the previous implementation, the access frequency of the stored block can continue to be counted in this implementation, and the access value of the block is re-determined based on the counted access frequency. On this basis, the storage location of the stored block can be adjusted according to the comparison result between the re-determined access value and the value threshold, so a block with a higher access value is always stored in the local storage space with a faster read/write speed, thereby ensuring efficiency of accessing the block by the user.

In addition, in this implementation, after the storage location of the stored block is adjusted, the block index table can be updated based on the adjusted storage location, so when the user needs to access a block, the user can search for the block that needs to be accessed according to the latest block index table, which alleviates a problem that the block that needs to be accessed cannot be found because the block index table is not updated in time.

Based on the above implementation, the present specification further provides a block data access method.

FIG. 5 is another block data access method shown in an example implementation of the present specification. As shown in FIG. 5, the method can include the following steps:

Step 501: Receive an access request for a target block.

In practice, a blockchain node may not receive an access request directed at a block, but an access request for data stored in the block. Therefore, when a request for any data such as target data is received, a target block that stores the target data can be preferentially determined, then a storage space that stores the target block is further determined, and then the target block stored in the determined storage space is accessed to obtain the target data.

Step 502: Obtain a block index table maintained by a blockchain node.

In this implementation, to determine the target block corresponding to the target data, data included in each block can be further recorded in a block index table in a process of generating the block. As such, when an access request for any data is received, a block including the any data can be determined, and further a storage space in which the block is stored is determined.

Step 503: Determine, based on the block index table, whether the target block is stored in a local storage space or an external storage space.

Table 1 in the above implementation is used as an example. Assume that the target block determined in step 501 is the block A, it can be determined, based on the block index table, that the block A is stored in the local storage space. Assume that the target block determined in step 501 is the block F, it can be determined, based on the block index table, that the block F is stored in the external storage space.

Step 504: When it is determined that the target block is stored in the external storage space, read the target block from the external storage space to the local storage space.

With reference to the above example, when the target block is the block F, the block F stored in the external storage space can be preferentially read to the local storage space. For example, the external storage space can be a cloud storage server, and then a request for obtaining the block F can be sent to the cloud storage server, so as to transfer the block F from the cloud storage server to the local storage space. Based on this, the block F that is transferred to the local storage space can be directly accessed.

Step 505: Access the target block that is read into the local storage space.

Step 506: When it is determined that the target block is stored in the local storage space, access the target block stored in the local storage space.

With reference to the above example, when the target block is the block A, the block A stored in the local storage space can be directly accessed.

It can be learned from the above technical solution that, when an access request for a target block is received, a storage space in which the target block is stored can be determined according to a block index table maintained by a blockchain node in the present specification. When it is determined that the target block is stored in the local storage space, the target block stored in the local storage space can be directly accessed. When it is determined that the target block is stored in the external storage space, the target block can be preferentially read from the external storage space to the local storage space, and then the target block that is read to the local storage space can be accessed. It can be understood that, by using the technical solution of the present specification, a storage location of a block can be accurately determined, thereby improving access efficiency of block data.

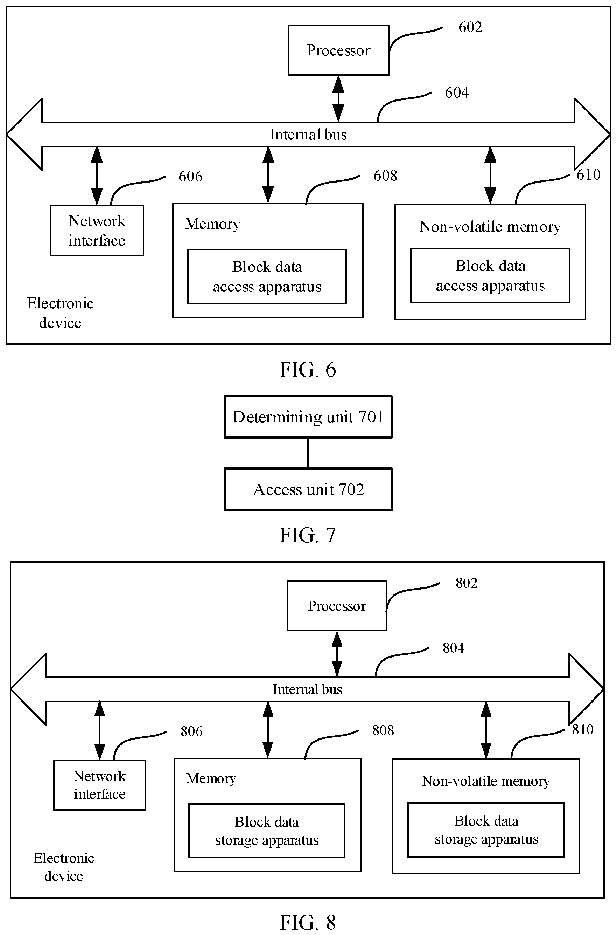

FIG. 6 is a schematic structural diagram of an electronic device according to an example implementation. Referring to FIG. 6, at a hardware level, the device includes a processor 602, an internal bus 604, a network interface 606, a memory 608, and a non-volatile memory 610. Certainly, the device can further include hardware required by another service. The processor 602 reads a corresponding computer program from the non-volatile memory 610 to the memory 608, and then runs the computer program to form a block data access apparatus at a logical level. Certainly, in addition to a software implementation method, one or more implementations of the present specification do not exclude another implementation method, such as a logic device or a combination of software and hardware, that is, execution bodies of the following processing procedures are not limited to each logical unit, or can be hardware or a logic device.

Referring to FIG. 7, in a software implementation method, the block data access apparatus can include: a determining unit 701, configured to determine, according to a block index table corresponding to the complete set of all blocks, the local storage space or the external storage space as a target storage space including a target block; or determine whether relevant information of the target block is recorded in a block index table of the one or more blocks stored in the local storage space; if yes, determine the local storage space as the target storage space; otherwise, determine the external storage space as the target storage space; and an access unit 702, configured to access, from the target storage space, target data included in the target block.

In some embodiments, the local storage space is used to preferentially store one or more blocks with a higher access value in blocks with an access value higher than the value threshold, if a total data amount of blocks with an access value higher than the value threshold is greater than a capacity of the local storage space. In some embodiments, a service value of each transaction is correlated with at least one of: an asset type involved, an asset amount involved, a transaction type, or importance of a user involved.

In some embodiments, the access value of the any block is also positively correlated with access popularity of the any block.

In some embodiments, the access popularity is positively correlated with access frequency of the any block within a predetermined duration; or the access popularity is predicted by a popularity analysis model according to the access frequency of the any block within the predetermined duration.

In some embodiments, the access value of the any block is predicted by a value analysis model according to the service value of the transaction included in the any block, the block height, and the access popularity.

In some embodiments, a degree of impact of the access value of the associated block on the access value of the any block is negatively correlated with a block height difference between the associated block and the any block.

In some embodiments, at least one transaction included in the any block is mutually associated with at least one transaction included in the associated block; and transactions mutually associated with each other have at least one of the following associations: a same asset type is involved, a same or similar transaction type is involved, a same user is involved, or involved users are associated.

In some embodiments, a data read/write speed of the local storage space is higher than a data read/write speed of the external storage space.

FIG. 8 is a schematic structural diagram of an electronic device according to an example implementation. Referring to FIG. 8, at a hardware level, the device includes a processor 802, an internal bus 804, a network interface 806, a memory 808, and a non-volatile memory 810. Certainly, the device can further include hardware required by another service. The processor 802 reads a corresponding computer program from the non-volatile memory 810 to the memory 808, and then runs the computer program to form a block data storage apparatus at a logical level. Certainly, in addition to a software implementation method, one or more implementations of the present specification do not exclude another implementation method, such as a logic device or a combination of software and hardware, that is, execution bodies of the following processing procedures are not limited to each logical unit, or can be hardware or a logic device.

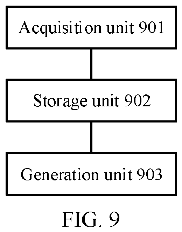

Referring to FIG. 9, in a software implementation method, the block data storage apparatus can include: an acquisition unit 901, configured to obtain a block generated by the blockchain node; a storage unit 902, configured to store the block to at least one of a local storage space or an external storage space, the local storage space being used to store one or more blocks with an access value greater than a value threshold, the external storage space being used to store one or more blocks not stored in the local storage space or to store a complete set of all blocks, the external storage space including at least one of a cloud storage server or a distributed storage device, and an access value of any block being positively correlated with at least one of a service value of a transaction included in the any block, a block height of the any block, or an access value of an associated block of the any block; and a generation unit 903, configured to generate a block index table corresponding to the complete set of all blocks according to storage locations of all blocks; or generate, according to the block stored in the local storage space, a block index table corresponding to the block stored in the local storage space.

In some embodiments, the storage unit 902 is further configured to: store a block with a higher access value in blocks with an access value higher than the value threshold to the local storage space, if a total data amount of blocks with an access value higher than the value threshold is greater than a capacity of the local storage space.

In some embodiments, a service value of each transaction is correlated with at least one of: an asset type involved, an asset amount involved, a transaction type, or importance of a user involved.

In some embodiments, the access value of the any block is also positively correlated with access popularity of the any block.

In some embodiments, the access popularity is positively correlated with access frequency of the any block within a predetermined duration; or the access popularity is predicted by a popularity analysis model according to the access frequency of the any block within the predetermined duration.

In some embodiments, the access value of the any block is predicted by a value analysis model according to the service value of the transaction included in the any block, the block height, and the access popularity.

In some embodiments, a degree of impact of the access value of the associated block on the access value of the any block is negatively correlated with a block height difference between the associated block and the any block.

In some embodiments, at least one transaction included in the any block is mutually associated with at least one transaction included in the associated block; and transactions mutually associated with each other have at least one of the following associations: a same asset type is involved, a same or similar transaction type is involved, a same user is involved, or involved users are associated.

In some embodiments, a data read/write speed of the local storage space is higher than a data read/write speed of the external storage space.

The present specification also includes the following example implementations:

1. A block data access method, applied to a blockchain node,

a storage space corresponding to the blockchain node including a local storage space and an external storage space, the external storage space including at least one of a cloud storage server or a distributed storage device, the local storage space being used to store one or more blocks with an access value greater than a value threshold, the external storage space being used to store one or more blocks not stored in the local storage space or to store a complete set of all blocks, and an access value of any block being positively correlated with at least one of: a service value of a transaction included in the any block, a block height of the any block, or an access value of an associated block of the any block;
the method comprising:

determining, according to a block index table corresponding to the complete set of all blocks, the local storage space or the external storage space as a target storage space including a target block; or determining whether relevant information of the target block is recorded in a block index table of the one or more blocks stored in the local storage space; if yes, determining the local storage space as the target storage space; otherwise, determining the external storage space as the target storage space; and accessing, from the target storage space, target data included in the target block.

2. The method according to example implementation 1, wherein the local storage space is used to preferentially store one or more blocks with a higher access value in blocks with an access value higher than the value threshold, if a total data amount of blocks with an access value higher than the value threshold is greater than a capacity of the local storage space.

3. The method according to example implementation 1, wherein a service value of each transaction is correlated with at least one of:
an asset type involved, an asset amount involved, a transaction type, or importance of a user involved.

4. The method according to example implementation 1, wherein the access value of the any block is also positively correlated with access popularity of the any block.

5. The method according to example implementation 4, wherein

the access popularity is positively correlated with access frequency of the any block within a predetermined duration; or
the access popularity is predicted by a popularity analysis model according to the access frequency of the any block within the predetermined duration.

6. The method according to example implementation 4, wherein
the access value of the any block is predicted by a value analysis model according to the service value of the transaction included in the any block, the block height, and the access popularity.

7. The method according to example implementation 1, wherein a degree of impact of the access value of the associated block on the access value of the any block is negatively correlated with a block height difference between the associated block and the any block.

8. The method according to example implementation 1, wherein at least one transaction included in the any block is mutually associated with at least one transaction included in the associated block; and transactions mutually associated with each other have at least one of the following associations:
a same asset type is involved, a same or similar transaction type is involved, a same user is involved, or involved users are associated.

9. The method according to example implementation 1, wherein a data read/write speed of the local storage space is higher than a data read/write speed of the external storage space.

10. A block data storage method, applied to a blockchain node and comprising:

obtaining a block generated by the blockchain node;
storing the block to at least one of a local storage space or an external storage space, the local storage space being used to store one or more blocks with an access value greater than a value threshold, the external storage space being used to store one or more blocks not stored in the local storage space or to store a complete set of all blocks, the external storage space including at least one of a cloud storage server or a distributed storage device, and an access value of any block being positively correlated with at least one of: a service value of a transaction included in the any block, a block height of the any block, or an access value of an associated block of the any block; and
generating a block index table corresponding to the complete set of all blocks according to storage locations of all blocks; or generating, according to the block stored in the local storage space, a block index table corresponding to the block stored in the local storage space.

11. The method according to example implementation 10, wherein the storing the block to the at least one of the local storage space or the external storage space includes:
storing a block with a higher access value in blocks with an access value higher than the value threshold to the local storage space, if a total data amount of blocks with an access value higher than the value threshold is greater than a capacity of the local storage space.

12. The method according to example implementation 10, wherein a service value of each transaction is correlated with at least one of:
an asset type involved, an asset amount involved, a transaction type, or importance of a user involved.

13. The method according to example implementation 10, wherein the access value of the any block is also positively correlated with access popularity of the any block.

14. The method according to example implementation 13, wherein

the access popularity is positively correlated with access frequency of the any block within a predetermined duration; or
the access popularity is predicted by a popularity analysis model according to the access frequency of the any block within the predetermined duration.

15. The method according to example implementation 13, wherein
the access value of the any block is predicted by a value analysis model according to the service value of the transaction included in the any block, the block height, and the access popularity.

16. The method according to example implementation 10, wherein a degree of impact of the access value of the associated block on the access value of the any block is negatively correlated with a block height difference between the associated block and the any block.

17. The method according to example implementation 10, wherein at least one transaction included in the any block is mutually associated with at least one transaction included in the associated block; and transactions mutually associated with each other have at least one of the following associations:
a same asset type is involved, a same or similar transaction type is involved, a same user is involved, or involved users are associated.

18. The method according to example implementation 10, wherein a data read/write speed of the local storage space is higher than a data read/write speed of the external storage space.

19. A block data access apparatus, applied to a blockchain node,

a storage space corresponding to the blockchain node including a local storage space and an external storage space, the external storage space including at least one of a cloud storage server or a distributed storage device, the local storage space being used to store one or more blocks with an access value greater than a value threshold, the external storage space being used to store one or more blocks not stored in the local storage space or store a complete set of all blocks, and an access value of any block being positively correlated with at least one of: a service value of a transaction included in the any block, a block height of the any block, or an access value of an associated block of the any block;
the apparatus including:

a determining unit, configured to determine, according to a block index table corresponding to the complete set of all blocks, the local storage space or the external storage space as a target storage space including a target block; or determine whether relevant information of the target block is recorded in a block index table of the one or more blocks stored in the local storage space; if yes, determine the local storage space as the target storage space; otherwise, determine the external storage space as the target storage space; and
an access unit, configured to access, from the target storage space, target data included in the target block.

20. A block data storage apparatus, applied to a blockchain node and comprising:

an acquisition unit, configured to obtain a block generated by the blockchain node;
a storage unit, configured to store the block to at least one of a local storage space or an external storage space, the local storage space being used to store one or more blocks with an access value greater than a value threshold, the external storage space being used to store one or more blocks not stored in the local storage space or to store a complete set of all blocks, the external storage space including at least one of a cloud storage server or a distributed storage device, and an access value of any block being positively correlated with at least one of: a service value of a transaction included in the any block, a block height of the any block, or an access value of an associated block of the any block; and
a generation unit, configured to generate a block index table corresponding to the complete set of all blocks according to storage locations of all blocks; or generate, according to the block stored in the local storage space, a block index table corresponding to the block stored in the local storage space.

21. An electronic device, comprising:

a processor; and
a memory configured to store executable instructions of the processor;
the processor implementing the method according to any one of example implementations 1-18 by running the executable instructions.

22. A computer readable storage medium storing computer instructions which, when executed by a processor, implement the steps of the method according to any one of example implementations 1-18.

The system, apparatus, module, or unit illustrated in the implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

In a typical configuration, a computer includes one or more processors (CPU), an input/output interface, a network interface, and a memory.

The memory can include at least one of a non-persistent memory, a random access memory (RAM), a non-volatile memory, or another form that is in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static random access memory (SRAM), a dynamic random access memory (DRAM), another type of RAM, a ROM, an electrically erasable programmable read-only memory (EEPROM), a flash memory or another memory technology, a compact disc read-only memory (CD-ROM), a digital versatile disc (DVD) or another optical storage, a cassette magnetic tape, a magnetic disk storage, a quantum memory, a graphene-based storage medium, another magnetic storage device, or any other non-transmission medium. The computer storage medium can be used to store information accessible by a computing device. Based on the definition in the present specification, the computer readable medium does not include transitory media such as a modulated data signal and carrier.

It is also worthwhile to note that terms "include," "comprise" or any other variant thereof is intended to cover non-exclusive inclusion, so processes, methods, products or devices that include a series of elements include not only those elements but also other elements that are not explicitly listed, or elements inherent in such processes, methods, products or devices. An element described by "includes a ..." further includes, without more constraints, another identical element in the process, method, product, or device that includes the element.

Specific implementations of the present specification are described above. Other implementations fall within the scope of the appended claims. In some situations, the actions or steps described in the claims can be performed in an order different from the order in the implementation and the desired results can still be achieved. In addition, the process depicted in the accompanying drawings does not necessarily require a particular execution order to achieve the desired results. In some implementations, multi-tasking and parallel processing can be advantageous.

The terms used in one or more implementations of the present specification are merely for illustrating specific implementations, and are not intended to limit one or more implementations of the present specification. The terms "a" and "the" of singular forms used in one or more implementations of the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first," "second," "third," etc., can be used in one or more implementations of the present specification to describe various types of information, the information is not limited to the terms. These terms are merely used to differentiate between information of the same type. For example, without departing from the scope of one or more implementations of the present specification, first information can also be referred to as second information, and similarly, the second information can be referred to as the first information. Depending on the context, for example, the word "if" used herein can be explained as "while," "when," or "in response to determining".

**Claims**

1. A block data access method, applied to a blockchain node,

a storage space corresponding to the blockchain node including a local storage space and an external storage space, the external storage space including at least one of a cloud storage server or a distributed storage device, the local storage space being used to store one or more blocks with an access value greater than a value threshold, the external storage space being used to store one or more blocks not stored in the local storage space or to store a complete set of all blocks, and an access value of any block being positively correlated with a service value of a transaction included in the any block, a block height of the any block, and an access value of an associated block of the any block, wherein a degree of impact of the access value of the associated block on the access value of the any block is negatively correlated with a block height difference between the associated block and the any block;

the method comprising:

determining (202), according to a block index table corresponding to the complete set of all blocks, the local storage space or the external storage space as a target storage space including a target block; or determining whether relevant information of the target block is recorded in a block index table of the one or more blocks stored in the local storage space; if yes, determining the local storage space as the target storage space; otherwise, determining the external storage space as the target storage space; and

accessing (204), from the target storage space, target data included in the target block, wherein two blocks are mutually associated when at least one transaction included in one block and at least one transaction included in the other block are mutually associated transactions, and wherein two transactions are mutually associated when a same asset type is involved, a same or similar transaction type is involved, a same user is involved, or involved users are associated.

2. The method according to claim 1, wherein the local storage space is used to preferentially store one or more blocks with a higher access value in blocks with an access value higher than the value threshold, if a total data amount of blocks with an access value higher than the value threshold is greater than a capacity of the local storage space.

3. The method according to claim 1, wherein a service value of each transaction is correlated with at least one of: an asset type involved, an asset amount involved, a transaction type, or importance of a user involved.

4. The method according to claim 1, wherein the access value of the any block is also positively correlated with access popularity of the any block.

5. The method according to claim 4, wherein

the access popularity is positively correlated with access frequency of the any block within a predetermined duration; or
the access popularity is predicted by a popularity analysis model according to the access frequency of the any block within the predetermined duration.

6. The method according to claim 4, wherein
the access value of the any block is predicted by a value analysis model according to the service value of the transaction included in the any block, the block height, and the access popularity.

7. The method according to claim 1, wherein a data read/ write speed of the local storage space is higher than a data read/write speed of the external storage space.

8. A block data storage method, applied to a blockchain node and comprising:

obtaining (102) a block generated by the blockchain node;
storing (104) the block to at least one of a local storage space or an external storage space, the local storage space being used to store one or more blocks with an access value greater than a value threshold, the external storage space being used to store one or more blocks not stored in the local storage space or to store a complete set of all blocks, the external storage space including at least one of a cloud storage server or a distributed storage device, and an access value of any block being positively correlated with a service value of a transaction included in the any block, a block height of the any block, and an access value of an associated block of the any block, wherein a degree of impact of the access value of the associated block on the access value of the any block is negatively correlated with a block height difference between the associated block and the any block; and
generating (106) a block index table corresponding to the complete set of all blocks according to storage locations of all blocks; or generating, according to the block stored in the local storage space, a block index table corresponding to the block stored in the local storage space,
wherein two blocks are mutually associated when at least one transaction included in one block and at least one transaction included in the other block are mutually associated transactions, and wherein two transactions are mutually associated when a same asset type is involved, a same or similar transaction type is involved, a same user is involved, or involved users are associated.

9. The method according to claim 8, wherein the storing the block to the at least one of the local storage space or the external storage space includes:
storing a block with a higher access value in blocks with an access value higher than the value threshold to the local storage space, if a total data amount of blocks with an access value higher than the value threshold is greater than a capacity of the local storage space.

10. The method according to claim 8, wherein a service value of each transaction is correlated with at least one of: an asset type involved, an asset amount involved, a transaction type, or importance of a user involved.

11. The method according to claim 8, wherein the access value of the any block is also positively correlated with access popularity of the any block.

12. An electronic device, comprising:

a processor; and
a memory configured to store executable instructions of the processor;
the processor implementing the method according to any one of claims 1-11 by running the executable instruction.

13. A computer readable storage medium storing computer instructions which, when executed by a processor, implement the steps of the method according to any one of claims 1-11.

**Patentansprüche**

1. Blockdatenzugriffsverfahren, das auf einen Blockchain-Knoten angewendet wird,

wobei ein Speicherplatz, der dem Blockchain-Knoten entspricht, einen lokalen Speicherplatz und einen externen Speicherplatz umfasst, wobei der externe Speicherplatz mindestens eines aus einem Cloud-Speicherserver oder einer verteilten Speichervorrichtung umfasst, wobei der lokale Speicherplatz verwendet wird, um einen oder mehrere Blöcke mit einem Zugriffswert zu speichern, der größer als ein Werteschwellwert ist, wobei der externe Speicherplatz verwendet wird, um einen oder mehrere Blöcke zu speichern, die nicht in dem lokalen Speicherplatz gespeichert sind, oder um einen vollständigen Satz aller Blöcke zu speichern, und wobei ein Zugriffswert eines beliebigen Blocks positiv mit einem Dienstwert einer Transaktion, die in dem beliebigen Block enthalten ist, einer Blockhöhe des beliebigen Blocks und einem Zugriffswert eines zugeordneten Blocks des beliebigen Blocks korreliert ist, wobei ein Auswirkungsgrad des Zugriffswerts des zugeordneten Blocks auf den Zugriffswert des beliebigen Blocks negativ mit einer Blockhöhendifferenz zwischen dem zugeordneten Block und dem beliebigen Block korreliert ist;
wobei das Verfahren umfasst:

Bestimmen (202), gemäß einer Blockindextabelle, die dem vollständigen Satz aller Blöcke entspricht, des lokalen Speicherplatzes oder des externen Speicherplatzes als einen Zielspeicherplatz, der einen Zielblock umfasst; oder Bestimmen, ob relevante Informationen des Zielblocks in einer Blockindextabelle des einen oder der mehreren Blöcke aufgezeichnet sind, die in dem lokalen Speicherplatz gespeichert sind; wenn ja, Bestimmen des lokalen Speicherplatzes als den Zielspeicherplatz; andernfalls Bestimmen des externen Speicherplatzes als den Zielspeicherplatz; und
Zugreifen (204) auf Zieldaten, die in dem Zielblock enthalten sind, aus dem Zielspeicherplatz,
wobei zwei Blöcke einander zugeordnet sind, wenn mindestens eine Transaktion, die in einem Block enthalten ist, und mindestens eine Transaktion, die in dem anderen Block enthalten ist, einander zugeordnete Transaktionen sind, und wobei zwei Transaktionen einander zugeordnet sind, wenn ein gleicher Anlagentyp beteiligt ist, ein gleicher oder ähnlicher Transaktionstyp beteiligt ist, ein gleicher Benutzer beteiligt ist oder beteiligte Benutzer zugeordnet sind.

2. Verfahren nach Anspruch 1, wobei der lokale Speicherplatz verwendet wird, um vorzugsweise einen oder mehrere Blöcke mit einem höheren Zugriffswert in Blöcken mit einem Zugriffswert, der höher als der Werteschwellwert ist, zu speichern, wenn eine Gesamtdatenmenge von Blöcken mit einem Zugriffswert, der höher als der Werteschwellwert ist, größer als eine Kapazität des lokalen Speicherplatzes ist.

3. Verfahren nach Anspruch 1, wobei ein Dienstwert jeder Transaktion mit mindestens einem von Folgendem korreliert ist:
einem beteiligten Anlagentyp, einer beteiligten Anlagenmenge, einem Transaktionstyp oder einer Wichtigkeit eines beteiligten Benutzers.

**4.** Verfahren nach Anspruch 1, wobei der Zugriffswert des beliebigen Blocks auch positiv mit der Zugriffspopularität des beliebigen Blocks korreliert ist.

**5.** Verfahren nach Anspruch 4, wobei

die Zugriffspopularität positiv mit der Zugriffshäufigkeit des beliebigen Blocks innerhalb einer vorbestimmten Dauer korreliert ist; oder
die Zugriffspopularität durch ein Popularitätsanalysemodell gemäß der Zugriffshäufigkeit des beliebigen Blocks innerhalb der vorbestimmten Dauer vorhergesagt wird.

**6.** Verfahren nach Anspruch 4, wobei
der Zugriffswert des beliebigen Blocks durch ein Wertanalysemodell gemäß dem Dienstwert der Transaktion, die in dem beliebigen Block enthalten ist, der Blockhöhe und der Zugriffspopularität vorhergesagt wird.

**7.** Verfahren nach Anspruch 1, wobei eine Datenlese-/Schreibgeschwindigkeit des lokalen Speicherplatzes höher als eine Datenlese-/ Schreibgeschwindigkeit des externen Speicherplatzes ist.

**8.** Blockdatenspeicherverfahren, das auf einen Blockchain-Knoten angewendet wird und umfasst:

Erhalten (102) eines Blocks, der durch den Blockchain-Knoten erzeugt wird;
Speichern (104) des Blocks in mindestens einem aus einem lokalen Speicherplatz oder einem externen Speicherplatz, wobei der lokale Speicherplatz verwendet wird, um einen oder mehrere Blöcke mit einem Zugriffswert zu speichern, der größer als ein Werteschwellwert ist, wobei der externe Speicherplatz verwendet wird, um einen oder mehrere Blöcke zu speichern, die nicht in dem lokalen Speicherplatz gespeichert sind, oder um einen vollständigen Satz aller Blöcke zu speichern, wobei der externe Speicherplatz mindestens eines aus einem Cloud-Speicherserver oder einer verteilten Speichervorrichtung umfasst, und wobei ein Zugriffswert eines beliebigen Blocks positiv mit einem Dienstwert einer Transaktion, die in dem beliebigen Block enthalten ist, einer Blockhöhe des beliebigen Blocks und einem Zugriffswert eines zugeordneten Blocks des beliebigen Blocks korreliert ist, wobei ein Auswirkungsgrad des Zugriffswerts des zugeordneten Blocks auf den Zugriffswert des beliebigen Blocks negativ mit einer Blockhöhendifferenz zwischen dem zugeordneten Block und dem beliebigen Block korreliert ist; und
Erzeugen (106) einer Blockindextabelle, die dem vollständigen Satz aller Blöcke entspricht, gemäß Speicherorten aller Blöcke; oder Erzeugen, gemäß dem Block, der in dem lokalen Speicherplatz gespeichert ist, einer Blockindextabelle, die dem Block entspricht, der in dem lokalen Speicherplatz gespeichert ist,
wobei zwei Blöcke einander zugeordnet sind, wenn mindestens eine Transaktion, die in einem Block enthalten ist, und mindestens eine Transaktion, die in dem anderen Block enthalten ist, einander zugeordnete Transaktionen sind, und wobei zwei Transaktionen einander zugeordnet sind, wenn ein gleicher Anlagentyp beteiligt ist, ein gleicher oder ähnlicher Transaktionstyp beteiligt ist, ein gleicher Benutzer beteiligt ist oder beteiligte Benutzer zugeordnet sind.

**9.** Verfahren nach Anspruch 8, wobei das Speichern des Blocks in dem lokalen Speicherplatz und/oder dem externen Speicherplatz umfasst:
Speichern eines Blocks mit einem höheren Zugriffswert in Blöcken mit einem Zugriffswert, der höher als der Werteschwellwert ist, in dem lokalen Speicherplatz, wenn eine Gesamtdatenmenge von Blöcken mit einem Zugriffswert, der höher als der Werteschwellwert ist, größer als eine Kapazität des lokalen Speicherplatzes ist.

**10.** Verfahren nach Anspruch 8, wobei ein Dienstwert jeder Transaktion mit mindestens einem von Folgendem korreliert ist:
einem beteiligten Anlagentyp, einer beteiligten Anlagenmenge, einem Transaktionstyp oder einer Wichtigkeit eines beteiligten Benutzers.

**11.** Verfahren nach Anspruch 8, wobei der Zugriffswert des beliebigen Blocks auch positiv mit der Zugriffspopularität des beliebigen Blocks korreliert ist.

**12.** Elektronische Vorrichtung, umfassend:

einen Prozessor; und
einen Speicher, der eingerichtet ist, ausführbare Befehle des Prozessors zu speichern;
wobei der Prozessor das Verfahren nach einem der Ansprüche 1-11 durch Ausführen des ausführbaren Befehls implementiert.

**13.** Computerlesbares Speichermedium, das Computerbefehle speichert, die, wenn sie von einem Prozessor ausgeführt werden, die Schritte des Verfahrens nach einem der Ansprüche 1-11 implementieren.

**Revendications**

**1.** Procédé d'accès à des données de bloc, appliqué à un noeud de chaîne de blocs,

un espace de stockage correspondant au noeud de chaîne de blocs incluant un espace de stockage local et un espace de stockage externe, l'espace de stockage externe incluant au moins l'un d'entre un serveur de stockage en nuage ou un dispositif de stockage distribué, l'espace de stockage local étant utilisé pour stocker un ou plusieurs blocs avec une valeur d'accès supérieure à un seuil de valeur, l'espace de stockage externe étant utilisé pour stocker un ou plusieurs blocs non stockés dans l'espace de stockage local ou pour stocker un ensemble complet de tous les blocs, et une valeur d'accès d'un bloc quelconque étant corrélée positivement avec une valeur de service d'une transaction incluse dans le bloc quelconque, une hauteur de bloc du bloc quelconque, et une valeur d'accès d'un bloc associé du bloc quelconque, dans lequel un degré d'impact de la valeur d'accès du bloc associé sur la valeur d'accès du bloc quelconque est corrélé négativement avec une différence de hauteur de bloc entre le bloc associé et le bloc quelconque ;
le procédé comprenant :

la détermination (202), en fonction d'une table d'index de blocs correspondant à l'ensemble complet de tous les blocs, de l'espace de stockage local ou de l'espace de stockage externe comme espace de stockage cible incluant un bloc cible ; ou la détermination si des informations pertinentes du bloc cible sont enregistrées dans une table d'index de blocs des un ou plusieurs blocs stockés dans l'espace de stockage local ; si oui, la détermination de l'espace de stockage local comme l'espace de stockage cible ; sinon, la détermination de l'espace de stockage externe comme l'espace de stockage cible ; et
l'accès (204), à partir de l'espace de stockage cible, à des données cibles incluses dans le bloc cible, dans lequel deux blocs sont mutuellement associés lorsqu'au moins une transaction incluse dans un bloc et au moins une transaction incluse dans l'autre bloc sont des transactions mutuellement associées, et dans lequel deux transactions sont mutuellement associées lorsqu'un même type d'actif est impliqué, un même type de transaction ou un type de transaction similaire est impliqué, un même utilisateur est impliqué, ou des utilisateurs impliqués sont associés.

**2.** Procédé selon la revendication 1, dans lequel l'espace de stockage local est utilisé pour stocker de préférence un ou plusieurs blocs avec une valeur d'accès supérieure dans des blocs avec une valeur d'accès supérieure au seuil de valeur, si une quantité totale de données de blocs avec une valeur d'accès supérieure au seuil de valeur est supérieure à une capacité de l'espace de stockage local.

**3.** Procédé selon la revendication 1, dans lequel une valeur de service de chaque transaction est corrélée à au moins l'un parmi :
un type d'actif impliqué, une quantité d'actif impliquée, un type de transaction, ou une importance d'un utilisateur impliqué.

**4.** Procédé selon la revendication 1, dans lequel la valeur d'accès du bloc quelconque est également corrélée positivement à une popularité d'accès du bloc quelconque.

**5.** Procédé selon la revendication 4, dans lequel

la popularité d'accès est corrélée positivement à une fréquence d'accès du bloc quelconque dans une durée prédéterminée ; ou
la popularité d'accès est prédite par un modèle d'analyse de popularité en fonction de la fréquence d'accès du bloc quelconque dans la durée prédéterminée.

6. Procédé selon la revendication 4, dans lequel
la valeur d'accès du bloc quelconque est prédite par un modèle d'analyse de valeur en fonction de la valeur de service de la transaction incluse dans le bloc quelconque, de la hauteur de bloc, et de la popularité d'accès.

7. Procédé selon la revendication 1, dans lequel une vitesse de lecture/écriture de données de l'espace de stockage local est supérieure à une vitesse de lecture/écriture de données de l'espace de stockage externe.

8. Procédé de stockage de données de bloc, appliqué à un noeud de chaîne de blocs et comprenant :

l'obtention (102) d'un bloc généré par le noeud de chaîne de blocs ;
le stockage (104) du bloc dans au moins l'un d'entre un espace de stockage local ou un espace de stockage externe, l'espace de stockage local étant utilisé pour stocker un ou plusieurs blocs avec une valeur d'accès supérieure à un seuil de valeur, l'espace de stockage externe étant utilisé pour stocker un ou plusieurs blocs non stockés dans l'espace de stockage local ou pour stocker un ensemble complet de tous les blocs, l'espace de stockage externe comprenant au moins l'un d'entre un serveur de stockage en nuage ou un dispositif de stockage distribué, et une valeur d'accès d'un bloc quelconque étant corrélée positivement avec une valeur de service d'une transaction incluse dans le bloc quelconque, une hauteur de bloc du bloc quelconque, et une valeur d'accès d'un bloc associé du bloc quelconque, dans lequel un degré d'impact de la valeur d'accès du bloc associé sur la valeur d'accès du bloc quelconque est corrélé négativement avec une différence de hauteur de bloc entre le bloc associé et le bloc quelconque ; et
la génération (106) d'une table d'index de blocs correspondant à l'ensemble complet de tous les blocs en fonction d'emplacements de stockage de tous les blocs ; ou la génération, en fonction du bloc stocké dans l'espace de stockage local, d'une table d'index de blocs correspondant au bloc stocké dans l'espace de stockage local,
dans lequel deux blocs sont mutuellement associés lorsqu'au moins une transaction incluse dans un bloc et au moins une transaction incluse dans l'autre bloc sont des transactions mutuellement associées, et dans lequel deux transactions sont mutuellement associées lorsqu'un même type d'actif est impliqué, un même type de transaction ou un type de transaction similaire est impliqué, un même utilisateur est impliqué, ou des utilisateurs impliqués sont associés.

9. Procédé selon la revendication 8, dans lequel le stockage du bloc dans l'au moins un de l'espace de stockage local ou de l'espace de stockage externe inclut :
le stockage d'un bloc avec une valeur d'accès supérieure dans des blocs avec une valeur d'accès supérieure au seuil de valeur dans l'espace de stockage local, si une quantité totale de données de blocs avec une valeur d'accès supérieure au seuil de valeur est supérieure à une capacité de l'espace de stockage local.

10. Procédé selon la revendication 8, dans lequel une valeur de service de chaque transaction est corrélée à au moins l'un parmi :
un type d'actif impliqué, une quantité d'actif impliquée, un type de transaction, ou une importance d'un utilisateur impliqué.

11. Procédé selon la revendication 8, dans lequel la valeur d'accès du bloc quelconque est également corrélée positivement à une popularité d'accès du bloc quelconque.

12. Dispositif électronique, comprenant :

un processeur ; et
une mémoire configurée pour stocker des instructions exécutables du processeur ;
le processeur mettant en oeuvre le procédé selon l'une quelconque des revendications 1 à 11 en exécutant l'instruction exécutable.

13. Support de stockage lisible par ordinateur stockant des instructions informatiques qui, lorsqu'elles sont exécutées par un processeur, mettent en oeuvre les étapes du procédé selon l'une quelconque des revendications 1 à 11.

```
┌─────────────────────────────────────────────────────────┐
│   Obtain a block generated by the blockchain node        │──── 102
└─────────────────────────────────────────────────────────┘
                            │
                            ▼
┌─────────────────────────────────────────────────────────┐
│   Store the block to at least one of a local storage     │
│   space or an external storage space, the local storage  │
│   space being used to store one or more blocks with an    │
│   access value greater than a value threshold, the        │
│   external storage space being used to store one or       │
│   more blocks not stored in the local storage space or    │
│   to store a complete set of all blocks, the external     │──── 104
│   storage space including at least one of a cloud         │
│   storage server or a distributed storage device, and an  │
│   access value of any block being positively correlated   │
│   with at least one of: a service value of a transaction  │
│   included in the any block, a block height of the any    │
│   block, or an access value of an associated block of     │
│   the any block                                           │
└─────────────────────────────────────────────────────────┘
                            │
                            ▼
┌─────────────────────────────────────────────────────────┐
│   Generate a block index table corresponding to the      │
│   complete set of all blocks according to storage         │
│   locations of all blocks; or generate, according to the  │──── 106
│   one or more blocks stored in the local storage          │
│   space, a block index table corresponding to the one or  │
│   more blocks stored in the local storage space           │
└─────────────────────────────────────────────────────────┘
```

FIG. 1

```
┌─────────────────────────────────────────────────────────┐
│   Determine, according to a block index table             │
│   corresponding to the complete set of all blocks, the    │
│   local storage space or the external storage space as    │
│   a target storage space including a target block; or     │
│   determine whether relevant information of the target    │──── 202
│   block is recorded in a block index table of one or      │
│   more blocks stored in the local storage space; if yes,  │
│   determine the local storage space as the target         │
│   storage space; otherwise, determine the external        │
│   storage space as the target storage space               │
└─────────────────────────────────────────────────────────┘
                            │
                            ▼
┌─────────────────────────────────────────────────────────┐
│   Access, from the target storage space, target data      │──── 204
│   included in the target block                            │
└─────────────────────────────────────────────────────────┘
```

FIG. 2

FIG. 3

Count access frequency of a block in next predetermined duration — 401

Re-determine a block access value based on the access frequency — 402

Compare the re-determined access value with a value threshold — 403

Adjust a storage location of the block based on the comparison result — 404

Update a block index table based on the adjustment result — 405

FIG. 4

Receive an access request for a target block — 501

Obtain a block index table — 502

Local

Determine that the target block is stored in a local storage space or an external storage space — 503

External

Read the target block from the external storage space to the local storage space — 504

Access the target block that is read into the local storage space — 505

Access the target block stored in the local storage space — 506

FIG. 5

Processor 602

Internal bus 604

Network interface 606

Memory 608

Block data access apparatus

Non-volatile memory 610

Block data access apparatus

Electronic device

FIG. 6

Determining unit 701

Access unit 702

FIG. 7

Processor 802

Internal bus 804

Network interface 806

Memory 808

Block data storage apparatus

Non-volatile memory 810

Block data storage apparatus

Electronic device

FIG. 8

```
┌─────────────────────────┐
│  Acquisition unit 901   │
└─────────────────────────┘
             │
┌─────────────────────────┐
│   Storage unit 902      │
└─────────────────────────┘
             │
┌─────────────────────────┐
│  Generation unit 903    │
└─────────────────────────┘
```

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110535687 A